# EUROPEAN PATENT SPECIFICATION

(11) **EP 2 744 062 B1**
(45) Date of publication and mention of the grant of the patent: **21.10.2015**
(21) Application number: 12460088.3
(22) Date of filing: 14.12.2012
(51) Int. Cl.: H02H 7/26, H02H 7/28

(54) **A subsea system with ride-through protection**
Unterseesystem mit Durchlaufschutz
Système sous-marin doté de protection d'alimentation

(43) Date of publication of application: 18.06.2014
(73) Proprietor: ABB Technology AG, 8050 Zürich (CH)
(72) Inventor: Dawidowski, Pawel, 59-220 Legnica (PL); Szewczyk, Marcin, 03-982 Warszawa (PL); Piasecki, Wojciech, 30-009 Krakow (PL); Moen, Tor-Eivind, 1397 Nesoya (NO); Wiik, Jan, 0575 Oslo (NO)
(74) Representative: Chochorowska-Winiarska, Krystyna

(56) References cited:
- WO-A1-2012/116742
- US-A- 5 144 517
- US-B1- 7 227 325

## Description

The subject of the invention is a subsea system powered from onshore system and with ride-through protection of the distribution system when a short circuit fault occurs on a load branch of the distribution system. The system is applied for an underwater AC or DC transmission system connected with the subsea distribution system powered from onshore especially for subsea oil and gas production.

In the patent description US 7227325 a method and an arrangement for protecting a frequency converter in a system comprising a motor and a frequency converter supplying it via a bipolar or multipolar supply connection is depicted. The arrangement comprises first connecting the crow-bar which is adapted to couple poles of the supply connection mutually substantially into short-circuit in response to a detection of a fault in the frequency converter. In this solution a crowbar is installed to protect the drive converter if a reverse current flows from the magnetizing circuit of the motor to the fault point. By using only the crowbar installed between a frequency converter and a motor no protection of the upstream distribution subsea power system is achieved by this solution because it is assumed the faulted point will be isolated by circuit breakers.

From patent description US 51445 17 an intrinsically safe barrier device is known. The device includes a current sensing circuit which triggers a silicon control rectifier based crowbar circuit in the event over current is detected. This triggering, in turn, trips a relay severing the current path entirely. A reverse polarity circuit provides for immediate clamping of improperly bias connections in a similar crowbar arrangement, and also provides for tripping of the circuit breaker. In this solution the crowbar circuit is described and its usage with current and voltage measurements. This solution does not cover the whole system, only protected safe zone is covered. The idea behind the solution presented in US 5144717 is to protect hazardous area from overcurrent or overvoltage situation. However this solution does not deal with the problem of current interruption at the upstream distribution system during a fault at the system side.

From patent application WO2012/116742 concerns protection from overvoltages an operation control unit connected to an electric machine via a long cable. The system comprises an operation control unit, an alternating current cable connecting the machine (load) with the operation unit and an electric short-circuiting arrangement. At these terminals it is expected the overvoltage occurs due to self-excitation caused by a combination of long cables and electric machines. This solution presents the alternative overvoltage protection system.

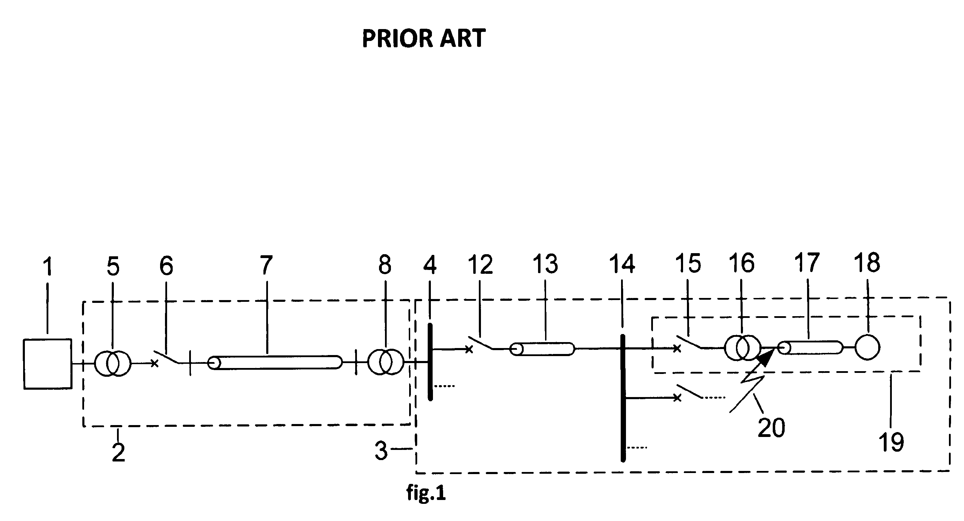

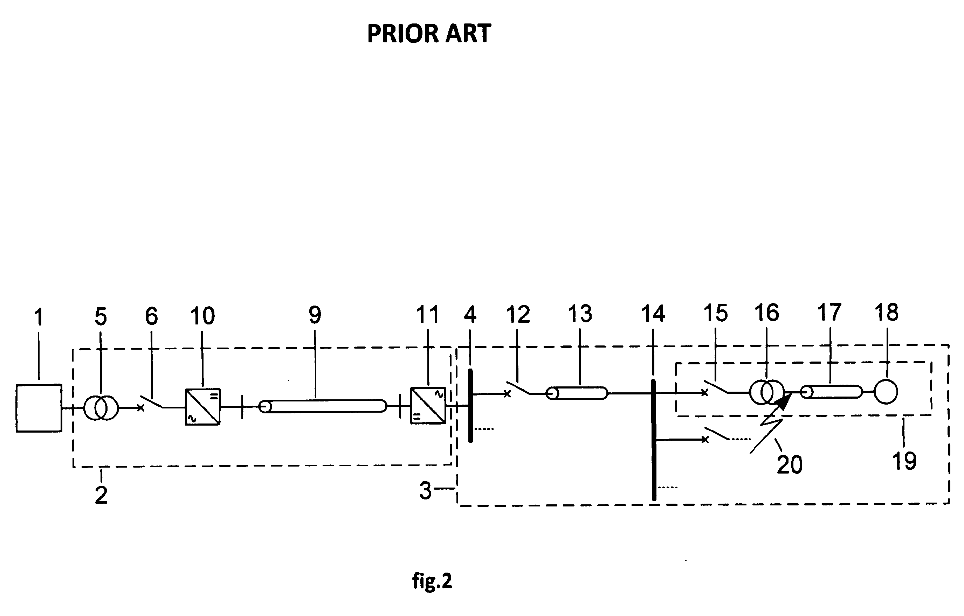

A commonly-known subsea system is one which is powered from the onshore power grid 1 which is connected through an AC or DC transmission system 2 to a subsea distribution system 3. The transmission system 2 energizes the distribution system 3 by providing a voltage to the subsea hub busbar 4. The transmission system 2 is located partially onshore and partially underwater. For the AC transmission and distribution system presented in fig.1, the transmission system 2 is comprised of an onshore power system 1 which is connected to the onshore power transformer 5. This is connected in series to the onshore transformer 5 where there an onshore circuit breaker 6 is connected. The circuit breaker 6 is connected to the subsea transmission cable 7 which is connected to the subsea power transformer 8. The onshore circuit breaker 6 protects the transmission cable 7, subsea power transformer 8 and subsea hub busbar 4. The subsea power transformer 8 energizes the distribution system 3 through a connection of the MV voltage side of the subsea transformer 8 to the hub busbar 4. For a DC transmission and distribution system such as presented in fig.2, the transmission system 2 comprises an onshore power system 1 which is connected to the onshore power transformer 5 which is connected in series to the onshore circuit breaker 6. The circuit breaker 6 is connected to the part of a subsea DC transmission cable 9 through an onshore AC/DC converter 10. The other part of the DC transmission line 9 is located underwater and is connected to the subsea DC/AC converter 11. The onshore circuit breaker 6 protects the onshore AC/DC converter, DC transmission cable 7, subsea DC/AC converter 11 and subsea hub busbar 4. For both AC and DC systems the distribution system 3 has a radial structure. It starts at the hub busbar 4 with one or more hub circuit breakers 12 connected. Each hub circuit breaker 12 is connected to the outgoing distribution cable 13. Each hub circuit breaker 12 protects each downstream outgoing distribution cable 13 and its corresponding subsea switchgear 14. Each switchgear 14 energizes one or more feeder circuit breakers 15 to which a feeder drive transformer 16 is connected. The feeder drive transformer 16 is connected to the drive cable 17 which energizes a subsea drive 18 - for example a pump or compressor. Each feeder circuit breaker 15 protects the drive transformer 16, drive cable 17 and drive unit 18. The circuit breaker 15, transformer 16 and subsea drive cable line 17, together with the drive unit 18, form a plurality of feeder lines 19. When a fault occurs in one of the feeder lines 19, which is indicated by the zig-zag 20, the circuit breaker 15 should interrupt the fault current for said faulted feeder line 19.

The presented system has many disadvantages. First, all of the vacuum circuit breakers for subsea application must be encapsulated which creates complex problem. Second, in the case when a short-circuit current occurs, an interruption is performed by the underwater circuit breakers and additional surge arresters must be installed to protect the subsea system.

The new ride-through based protection solution eliminates this disadvantage by installing only one circuit breaker, e.g. at the onshore substation, and by the installation of a crowbar connected to the subsea hub busbar.

The invention is defined by claim 1.

An essence of a subsea system powered from onshore system having a distribution system with a subsea hub busbar to which at least one AC or DC subsea outgoing distribution cable is connected and having a subsea switchgear busbar to which at least one feeder drive line is connected, where the feeder drive line(s) comprises subsea drive transformer and subsea drive cable line connected to the drive unit is that the distribution system is provided with a ride-trough protection system having a hub switch device in the form of a disconnector or low current switch, connected in series between the hub busbar and the outgoing distribution cable, and having a feeder switch device in the form of disconnector or low current switch, connected in series in the feeder drive line between the drive transformer and the subsea switchgear busbar. A crowbar is connected to the hub busbar for providing an additional fault current path at the subsea busbar to limit any potential overvoltage and to extinguish the fault current at the fault location .

Preferably the distribution system is connected to the transmission system through the subsea hub busbar and a subsea power transformer or a subsea DC/AC converter.

Preferably the transmission system contains only one circuit breaker which is placed between an onshore transformer and subsea transmission cable for an AC system or between the onshore transformer and AC/DC converter for a DC system.

Preferably the feeder switch device has the form of a current solid state switch.

Preferably the subsea drive transformer is adapted to restart the subsea drive unit during the short no-voltage stage in the faulted feeder drive line when the drive-unit is switched-off after the fault occurs at the distribution system and the faulted feeder drive line is disconnected by the feeder switch device.

Preferably the subsea drive transformer has the form of a split core transformer.

Preferably the feeder switch device has the form of mechanical disconnector, operated by an Intelligent Electronic Device (IED) connected to the current measuring device.

Preferably each of the subsea drive units forms a reservoir of electrical energy when a fault occurs in the feeder drive line.

The installation of the crowbar allows for the elimination of overvoltages and self-extinguishes the fault current at the fault location. This allows switching off of the faulted section of the distribution system with a low current at the fault location. More compact switches can therefore be installed at the subsea hub and subsea switchgears. These compact switches can be realised as solid state switches or disconnectors. The new solution is based on the installation of a single current-interruption device. An appropriate switching sequence during a fault allows the installation of less-complex switchgear leading to an overall simplification of the switchgear. An additional installation of the crowbar at the subsea hub provides an alternative fault-current path. A forced fault current level can be detected at the onshore substation. In the case of a failure of communication between the subsea and onshore installations, an appropriate switching sequence still be possible. Also by activating the crowbar device any expected overvoltage during fault clearance can be limited.

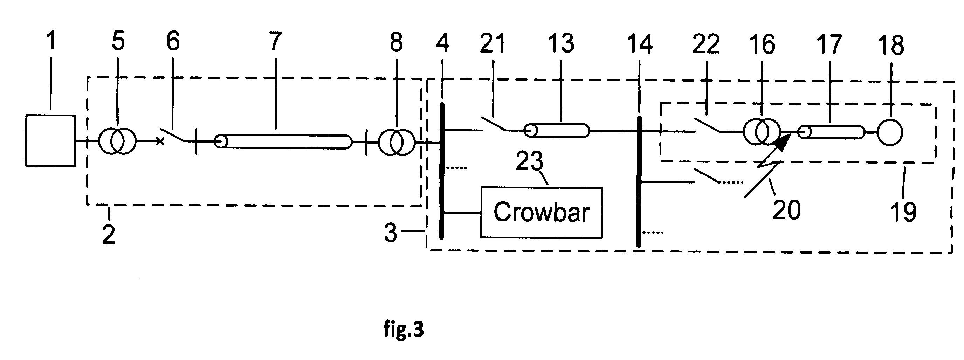

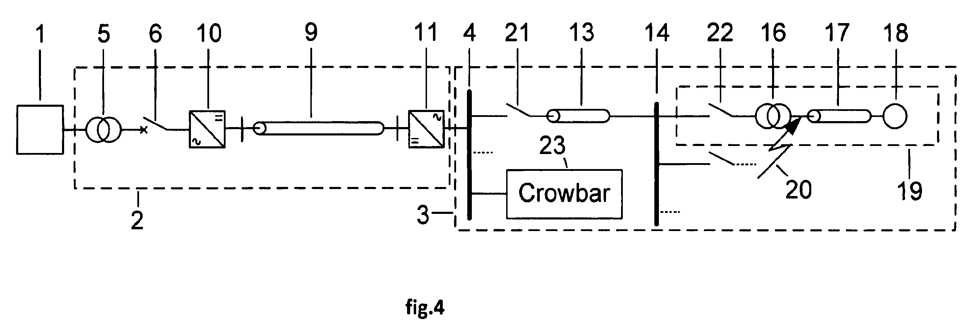

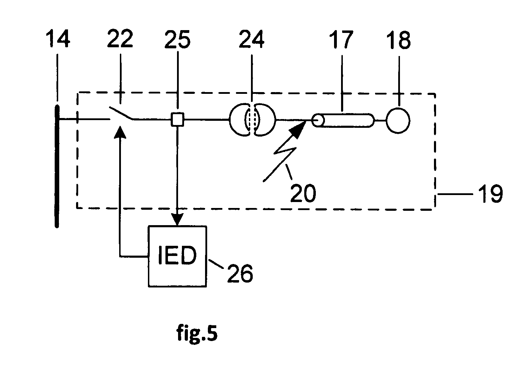

The subject of the invention is presented as an embodiment in the drawing where fig. 1 shows a known subsea AC transmission and distribution system, fig. 2 shows a known subsea DC transmission and distribution system, fig. 3 shows a subsea AC transmission and distribution system with new elements, fig. 4 shows a subsea DC transmission and distribution system with new elements and fig.5 shows a fragment of distribution system from fig.3 and 4, where a feeder drive line is equipped with a split core transformer.

In comparison with the known prior art a new AC or DC system where, instead of subsea hub circuit breaker 12, a hub switch device 21 is used in each branch connected to the subsea hub busbar 4. The hub switch device 21 has the form of a disconnector or low current solid switch. Also instead of a subsea feeder circuit breaker 15 a feeder switch device 22 is used in each branch connected to the subsea switchgear busbar 14. The feeder switch device 22 has the form of a subsea feeder disconnector or a low current switch. Preferably the feeder switch device 22 has the form of a current solid stateswitch. In such a system a crowbar 23 is connected to the hub busbar 4. The role of the crowbar 23 is to provide an additional fault current path at the subsea hub busbar 4 to limit any potential overvoltage and to extinguish the fault current at the fault location 20. This protects the whole downstream distribution system 3 from power system faults. When the fault 20 at the subsea distribution system 3 occurs, a crowbar 23 will force the fault current to be extinguished at the hub busbar 4. The onshore circuit breaker 6 then interrupts the short circuit current caused by crowbar 23. When the fault 20 occurs at one of the feeder lines 19 the feeder switch device 22 disconnects the faulted branch so that the drive transformer 16, drive cable 17 and drive equipment are protected. After crowbar 23 is opened, the whole system is reengergized by the onshore circuit breaker 6. In a special embodiment of the feeder lines 19 presented in fig.5, the transformer 16 has the form of a split core transformer 24. In this case, between the switch device 23 and one side of the split core drive transformer 24, a current measurement device 25 is connected which is processed in an Intelligent Electronic Device IED 26 which is also connected with the switch device 23 .

The process of ride-through protection is realized by the following sequence of a switching operations:
- A fault 20 occurs at the distribution system 3.
- A crowbar 23 creates additional faults at the point of common coupling, which will limit over-voltages and will cause fault 20 to self-extinguish.
- When the crowbar 23 forces the fault 20 to self-extinguish the feeder switch device 22 will disconnect the faulted feeder drive line 19.
- Ride-through assumes that the energy stored in every switched-off drive unit 18 will be sufficient to operate said drive during the short no-voltage state in the branch 19.
- The onshore circuit breaker 6 will interrupt the short-circuit current which flows through transmission system 2.
- When the transmission system 2 is not energized the crowbar 23 will open.
- The whole system can then be reenergized by closing the onshore circuit breaker 6.

The list of indications on the drawing.

### Onshore power system

1. Onshore power system
2. Subsea transmission system
3. Subsea distribution system
4. Subsea hub busbar
5. Onshore power transformer
6. Onshore circuit breaker
7. Subsea transmission cable
8. Subsea power transformer
9. Subsea DC transmission cable
10. Onshore AC-DC converter
11. Subsea DC-AC converter
12. Subsea hub circuit breaker
13. Outgoing distribution cable
14. Subsea switchgear busbar
15. Subsea feeder circuit breaker
16. Subsea drive transformer
17. Subsea drive cable line
18. Subsea drive unit
19. Feeder drive line
20. Fault indication
21. Hub switch device
22. Feeder switch device
23. Crowbar
24. Split-core drive transformer
25. Current measurement device
26. Intelligent Electronics Device (IED)

## Claims

1. A subsea system powered from onshore system, the subsea system having a subsea distribution system (3) connected through an AC or DC transmission system (2) with the onshore power system (1) and in which the distribution system (3) comprises a subsea hub busbar (4) to which at least one AC or DC outgoing distribution cable (13) is connected and having a subsea switchgear busbar (14) to which at least one feeder drive line (19) is connected, where the feeder drive line (19) comprises a subsea drive transformer (16) and subsea drive cable line (17) connected to a drive unit (18), **characterized in that** the distribution system (3) is provided with a ride-through protection system having a hub switch device (21), in the form of disconnector or low current switch, connected in series between the hub busbar (4) and an outgoing distribution cable (13) and having a feeder switch device (22) in the form of disconnector or low current switch, connected in series between the drive transformer (16) and the subsea switchgear busbar (14) in the feeder drive line (19), and wherein a crowbar (23) is connected to the hub busbar (4) for providing an additional fault current path at the subsea hub busbar (4) to limit any potential overvoltage and to extinguish a fault current at a fault location (20) in the at least one feeder drive line (19).

2. A subsea system according to claim 1, **characterized in that** the distribution system (3) is connected to the transmission system (2) through the subsea hub busbar (4) and to a subsea power transformer (8) or a subsea DC/AC converter (11).

3. A subsea system according to claims 1-2, **characterized in that** the transmission system (2) is provided with only one circuit breaker (6) which is placed between an onshore transformer (5) and a subsea transmission cable (7) for an AC system or between the onshore transformer (5) and an AC/DC converter (10) for a DC system.

4. A subsea system according to any of the previous claims, **characterized in that** the feeder switch device (22) has the form of a current solid state switch.

5. A subsea system according to any of the previous claims, **characterized in that** the subsea drive transformer (16) is adapted to restart the subsea drive unit (18) during a short no-voltage stage in the faulted feeder drive line (19) when the drive-unit (18) is switched-off after the fault (20) occurs at the distribution system (3) and the faulted feeder drive line (19) is disconnected by the feeder switch device (22).

6. A subsea system according to claim 5, **characterized in that** the subsea drive transformer has the form of a split core transformer (24).

7. A subsea system according to claim 6, **characterized in that** the feeder switch device (22) has the form of a mechanical disconnector, operated by an IED (26) connected to the current measuring device (25).

8. A subsea system according to any of the previous claims, **characterized in that** each of the subsea drive units (18) forms a reservoir of electrical energy when a fault (20) occurs in the feeder drive line (19).

## Patentansprüche

1. Ein Unterseesystem mit Durchlaufschutz, betrieben durch ein Onshore-System, wobei das Unterseesystem ein Untersee-Verteilungssystem (3) besitzt, das mit dem Onshore-Stromsystem (1) durch ein Wechselstrom- oder Gleichstrom-Übertragungssystem (2) verbunden ist, und in dem das Verteilungssystem (3) eine Untersee-Knotenpunktsammelschiene (4) enthält, an der mindestens ein abgehendes Verteilungskabel (13) für Wechsel- oder Gleichstrom angeschlossen ist, und die eine Untersee-Schaltanlagensammelschiene (14) hat, an der mindestens eine Einspeiseleitung (19) angeschlossen ist, wobei die Einspeiseleitung (19) einen Untersee-Antriebstransformator (16) und eine Unterseekabelleitung (17) enthält, die mit einer Antriebseinheit (18) verbunden sind, **dadurch gekennzeichnet, dass** das Untersee-Verteilungssystem (3) mit einem Durchlaufschutzsystem vom Typ "Arbeit bei Kurzschluss" ausgerüstet ist, das eine Trenneinrichtung des Hauptverteilers (21) in Form eines Trennschalters oder eines Niederspannungsschalters besitzt, die in Serie zwischen der Knotenpunktsammelschiene (4) und dem abgehenden Verteilungskabel (13) geschaltet ist, und das eine Trenneinrichtung der abgehenden Antriebsleitung (22) in Form eines Trennschalters oder eines Niederspannungsschalters besitzt, die in Serie zwischen dem Antriebstransformator (16) und der Untersee-Schaltanlagensammelschiene (14) in der den elektrischen Antrieb einspeisenden Leitung (19) geschaltet ist, und wobei ein Überspannungsschutz vom Typ Crowbar (23) an die Untersee-Knotenpunktsammelschiene (4) zur Bereitstellung eines zusätzlichen Fehlerstrompfades an der Untersee-Knotenpunktsammelschiene (4) angeschlossen ist, um potentielle Überspannungen zu begrenzen und um einen Fehlerstrom an einem Fehlerort (20) in mindestens einer den elektrischen Antrieb einspeisenden Leitung (19) zu beseitigen.

2. Ein Unterseesystem gemäß Anspruch 1, **dadurch gekennzeichnet, dass** das Untersee-Verteilungssystem (3) mit dem Übertragungssystem (2) durch die Untersee-Knotenpunktsammelschiene (4) an einen Untersee-Einspeisetransformator (8) oder einen Untersee-Gleich-/Wechselstromumrichter (11) angeschlossen ist.

3. Ein Unterseesystem gemäß den Ansprüchen 1-2, **dadurch gekennzeichnet, dass** das Übertragungssystem (2) mit nur einem Schutzschalter (6) ausgestattet ist, der zwischen einem Onshore-Transformator (5) und einem Untersee-Übertragungskabel (7) für ein Wechselstromsystem oder zwischen dem Onshore-Transformator (5) und einem Gleich-/Wechselstromumrichter (10) für ein Gleichstromsystem angeordnet ist.

4. Ein Unterseesystem gemäß irgendeinem der vorherigen Ansprüche, **dadurch gekennzeichnet, dass** die Trenneinrichtung der abgehenden Antriebsleitung (22) die Form eines Halbleiter--Verbindungsstücks hat.

5. Ein Unterseesystem gemäß irgendeinem der vorherigen Ansprüche, **dadurch gekennzeichnet, dass** der Untersee-Antriebstransformator (16) so angepasst ist, dass er die Untersee-Antriebseinheit (18) während eines kurzen spannungslosen Zustandes in der fehlerhaften Einspeiseleitung (19) neu startet, wenn die Antriebseinheit (18) abgeschaltet wurde, nachdem der Fehler (20) im Untersee-Verteilungssystem (3) aufgetreten ist und die fehlerhafte, den elektrischen Antrieb einspeisende Leitung (19) durch die Trenneinrichtung der abgehenden Antriebsleitung (22) abgeschaltet ist.

6. Ein Unterseesystem gemäß Anspruch 5, **dadurch gekennzeichnet, dass** der Untersee-Antriebstransformator die Form eines Zangenstromwandler (24) hat.

7. Ein Unterseesystem gemäß Anspruch 6, **dadurch gekennzeichnet, dass** die Trenneinrichtung der abgehenden Antriebsleitung (22) die Form eines mechanischen Trennschalters hat, der durch ein Schutzrelais IED (26) betätigt wird, das an die Strommesseinrichtung (25) angeschlossen ist.

8. Ein Unterseesystem gemäß irgendeinem der vorherigen Ansprüche, **dadurch gekennzeichnet, dass** jede der Untersee-Antriebseinheiten (18) einen Vorrat an elektrischer Energie bildet, wenn ein Fehler (20) in der den elektrischen Antrieb einspeisende Leitung (19) auftritt.

## Revendications

1. Système sous-marin doté de protection d'alimentation alimenté d'un système situé sur la côte, le système sous-marin possédant un réseau de distribution sous-marin (3) connecté au système d'alimentation côtier (1) par l'intermédiaire d'un système de transmission (2) AC ou DC, où le réseau de distribution sous-marin (3) comprend un plot de barre omnibus sous-marin (4) auquel est connecté au moins un câble de sortie (13) AC ou DC, et possédant un appareillage de connexion avec un jeu de barres (14) sous-marin auquel au moins un câble d'alimentation de l'entraînement électrique (19) est connecté, où le câble d'alimentation de l'entraînement électrique (19) comprend un transformateur d'entraînement sous-marin (16) et une ligne de câble d'entraînement (17) connectée à l'entraînement électrique (18), **caractérisé en ce que** le réseau de distribution sous-marin (3) est muni d'une protection contre les creux de tension appelée système FRT (fault ride through), ayant un dispositif d'interruption du répartiteur (21) en forme de l'interrupteur ou du commutateur basse tension, branchés en série sur le plot de barre omnibus sous-marin (4) et le câble de sortie (13), et possédant un dispositif d'interruption de courant (22) en forme de l'interrupteur ou du commutateur basse tension, branchés en série entre le transformateur d'entraînement sous-marin (16) et l'appareillage de connexion avec du jeu de barres (14) dans la ligne du câble d'alimentation de l'entraînement (19), où une protection contre le court-circuit (23) est connectée sur le plot de barre omnibus sous-marin (4) pour assurer une voie supplémentaire de court-circuit dans le plot de barre omnibus sous-marin (4) afin de limiter de potentielles surcharges et éteindre le courant court-circuité dans l'endroit de survenance du court-circuit (20) dans au moins un câble d'alimentation de l'entraînement (19).

2. Système sous-marin selon la revendication 1, **caractérisé en ce que** le réseau de distribution sous-marin (3) est connecté au système de transmission (2) par l'intermédiaire du plot de barre omnibus sous-marin (4) et au transformateur de courant sous-marin (8) ou au convertisseur DC/AC (11).

3. Système sous-marin selon les revendications 1-3, **caractérisé en ce que** le réseau de distribution sous-marin (3) est muni d'un seul interrupteur (6) seulement qui est placé entre le transformateur côtier (5) et le câble de transmission sous-marin (7) en cas du système AC, ou entre le transformateur côtier (5) et le convertisseur AC/DC (10) en cas du système DC.

4. Système sous-marin selon une quelconque des revendications précédentes, **caractérisé en ce que** le dispositif d'interruption de courant (22) constitue un interrupteur semiconducteur.

5. Système sous-marin selon une quelconque des revendications précédentes, **caractérisé en ce que le** transformateur d'entraînement sous-marin (16) est adapté à faire de nouveau démarrer l'entraînement électrique (18) en cas d'une courte coupure de tension dans le câble d'alimentation de l'entraînement (19) court-circuité lorsque l'entraînement électrique est déconnecté après la survenance du court-circuit (20) dans le réseau de distribution sous-marin (3) et la ligne d'alimentation de l'entraînement électrique (19) est mise hors circuit par le dispositif d'interruption de courant (22).

6. Système sous-marin selon la revendication 5, **caractérisé en ce que** le transformateur d'entraînement sous-marin constitue un noyau séparé (24).

7. Système sous-marin selon la revendication 5, **caractérisé en ce que** le dispositif d'interruption de courant (22) constitue un disjoncteur mécanique commandé par un relais de sécurité IED (26) connecté au dispositif à mesurer la valeur du courant (25).

8. Système sous-marin selon une quelconque des revendications précédentes, **caractérisé en ce que** tout entraînement électrique (18) sous-marin constitue un réservoir d'énergie lorsque se produit un court-circuit (20) dans la ligne d'alimentation de l'entraînement électrique (19).
